# EUROPÄISCHE PATENTSCHRIFT

(11) **EP 0 963 786 B1**
(45) Veröffentlichungstag und Bekanntmachung des Hinweises auf die Patenterteilung: **02.01.2004**
(21) Anmeldenummer: 99111132.9
(22) Anmeldetag: 08.06.1999
(51) Int. Cl.: B01J 8/24, B01J 8/44, C08F 2/34, C08F 10/00

(54) **Gasphasenwirbelschichtreaktor**
Gas phase fluidised bed reactor
Réacteur à lit fluidisé en phase gazeuse

(30) Priorität: 09.06.1998 DE 19825589
(43) Veröffentlichungstag der Anmeldung: 15.12.1999
(73) Patentinhaber: Basell Polyolefine GmbH, 50389 Wesseling (DE)
(72) Erfinder: Knauer, Benno, 67067 Ludwigshafen (DE); Hennenberger, Peter Dr., 67251 Freinsheim (DE); Hilligardt, Klaus Dr., 67117 Limburgerhof (DE); Schauss, Eckard Dr., 67259 Heuchelheim (DE); Bullack, Horst, 50389 Wesseling (DE)

(56) Entgegenhaltungen:
- EP-A- 0 825 204
- GB-A- 1 069 729
- GB-A- 2 271 727
- US-A- 3 829 983
- US-A- 5 627 243

## Beschreibung

Gegenstand der vorliegenden Erfindung ist ein Gasphasenwirbelschichtreaktor zur Polymerisation ethylenisch ungesättigter Monomerer, umfassend einen Reaktorraum (1) in Form eines vertikalen Rohres, eine an den oberen Teil des Reaktorraumes anschließende Beruhigungszone (2), eine Kreisgasleitung (3), einen Kreisgaskompressor (4), eine Kühleinrichtung (5), eine Gasverteilerplatte (6), welche die untere Begrenzung des Reaktorraumes darstellt und gewünschtenfalls einen Strömungsteiler (7), wobei die Gasverteilerplatte (6) eine Vielzahl von Gasdurchlaßöffnungen (8) aufweist, deren Ausgangsseiten konisch aufgeweitet sind.

Weiterhin ist Gegenstand der vorliegenden Erfindung ein Verfahren zur Polymerisation von Ethylen oder Copolymerisation von Ethylen mit C₃- bis C₈-α-Olefinen in einem solchen Reaktor.

Gasphasenpolymerisationsverfahren gehören heute zu den bevorzugten Verfahren zur Polymerisation ethylenisch ungesättigter Monomerer, insbesondere zur Polymerisation von Ethylen, gewünschtenfalls in Gegenwart weiterer ungesättigter Monomerer. Dabei gelten Polymerisationsverfahren in Wirbelschichten als besonders wirtschaftlich.

Gasphasenwirbelschichtreaktoren zur Durchführung solcher Verfahren sind seit langem bekannt. Die heute üblichen Reaktoren weisen dabei viele gemeinsame Strukturmerkmale auf: Sie bestehen unter anderem aus einem Reaktorraum in Form eines vertikalen Rohres, welches im oberen Teil eine Erweiterung des Durchmessers aufweist. In dieser Beruhigungszone herrscht infolge des größeren Rohrdurchmessers ein geringerer Gasstrom, der zu einer Begrenzung des aus kleinteiligem Polymerisat bestehenden Wirbelbetts führt. Weiterhin enthalten diese Reaktoren eine Kreisgasleitung, in welcher Kühlaggregate zur Abführung der Polymerisationswärme, ein Kompressor und gewünschtenfalls weitere Elemente wie beispielsweise ein Zyklon zur Entfernung von Polymerisat-Feinstaub angebracht sind. Beispiele solcher Gasphasenwirbelschichtreaktoren wurden beispielsweise in EP-A-0 202 076, EP-A-0 549 252 und EP-A-0 697 421 beschrieben.

Diese bekannten Gasphasenwirbelschichtreaktoren verwenden zur gleichmäßigen Gasverteilung über den gesamten Reaktorquerschnitt zu Lochböden ausgebildete Gasverteilerkonstruktionen, teilweise in Kombination mit vorgeschaltetem Strömungsteiler. Alle diese Konstruktionen bedingen zwischen den Gasdurchtrittsöffnungen bzw. -bohrungen je nach Lochabstand mehr oder weniger stark ausgedehnte horizontale, planare Oberflächen an der Reaktorbodenoberseite, die vom gasförmigen Reaktionsmedium nur in begrenztem Umfang angeströmt werden. Um Produktanwachsungen an diesen Flächen zu vermeiden, können gemäß EP-A-0 173 261 dachförmige Umlenkbleche oberhalb der Bodenplatte so angeordnet werden, daß das Reaktionsmedium die Stirnflächen der Umlenkbleche und die Bodenoberfläche überstreicht. Eine ausschließlich vertikale Strömung des Reaktionsmediums unmittelbar ins Pulverbett ist mit dieser Anordnung nicht gegeben.

Das vertikale Ausblasen der Bodenoberfläche scheint aber beim Wiederanfahren der Wirbelschicht z.B. nach einer Abstellung von Bedeutung; dachförmige Umlenkbleche führen zudem zu einem höheren Druckverlust, als er zur Erzeugung einer gleichmäßigen Wirbelschicht erforderlich ist, und sind daher mit unnötigem Leistungseintrag und Energieverbrauch verbunden.

Ebenfalls horizontale Verwirbelung des Reaktionsmediums auf der Bodenoberfläche beschreibt EP-A-0 512 147. Dies wird erreicht durch schräg zur Gasverteileroberfläche verlaufende Gasdurchtrittsöffnungen, die technisch sehr aufwendig zu fertigen sind und deshalb als Einzelstücke in die Bodenplatte eingelassen werden müssen. Die auffällige Länge der Gaskanäle erleichtert auch das Verstopfen des Gasverteilerbodens und erschwert dessen Reinigung.

In Dokumenten wie EP-A-549 252, EP-A-297 794 und EP-A-509 618 wird versucht, durch nach innen abgekantete oder gewinkelte Gasverteilerböden das Polymerpulver an der Bodenoberfläche in Fluß zu halten. Ein Ab- oder Ausblasen der Bodenoberfläche zur Vermeidung von Produktanwachsungen ist bei diesen Konstruktionen nur bedingt gegeben.

Der vorliegenden Erfindung lag daher die Aufgabe zugrunde, einen Gasphasenwirbelschichtreaktor bereitzustellen, dessen Gasverteilerboden so konstruiert ist, daß die geschilderten Nachteile vermieden werden können und die Belagbildung an der Oberseite des Reaktorbodens auf einfache Weise vermindert werden kann.

Demgemäß wurde der eingangs beschriebene Gasphasenwirbelschichtreaktor gefunden.

Weiterhin wurde ein Polymerisationsverfahren gefunden, welches in dem erfindungsgemäßen Gasphasenwirbelschichtreaktor durchgeführt wird.

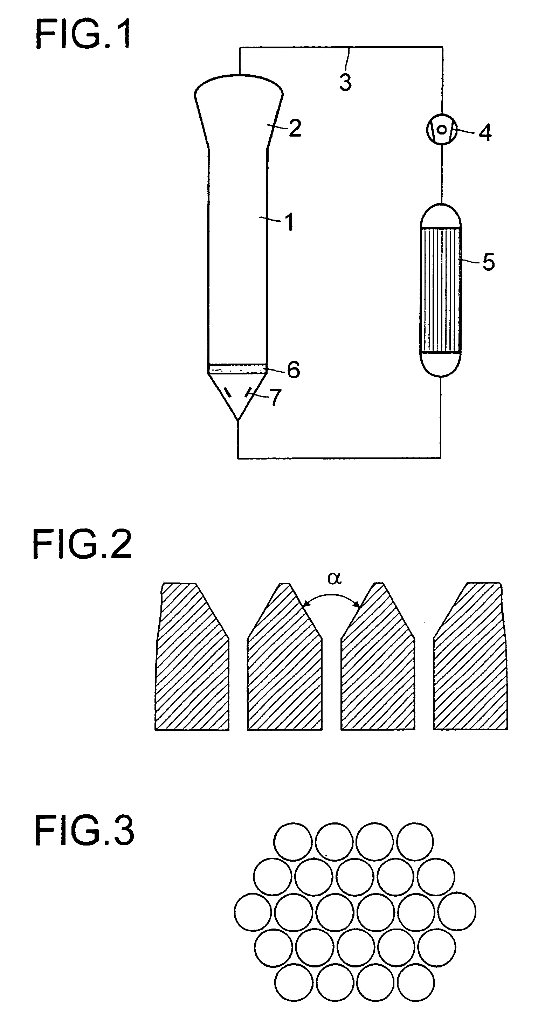

Der in Fig. 1 abgebildete Gasphasenwirbelschichtreaktor stellt lediglich eine von zahlreichen möglichen schematischen Anordnungen dar. So kann beispielsweise die Reihenfolge der Aggregate in der Kreisgasleitung, insbesondere von Kühler und Kompressor, auch umgekehrt sein oder es können weitere Aggregate integriert werden. Weitere Elemente wie Systeme zum Produktaustrag und zur Katalysatorzudosierung werden in Fig. 1 nicht aufgeführt, solche Elemente sind dem Fachmann vertraut und können in bekannter Weise in den Reaktor integriert werden.

Ein wesentliches Merkmal des erfindungsgemäßen Gasphasenwirbelschichtreaktors ist die Geometrie des Reaktorbodens und insbesondere die Form der Gasdurchlaßöffnungen. Die konisch aufgeweitete Struktur dieser Öffnungen vermindert in wirksamer Weise die Bildung von Polymerisatablagerungen an der Bodenoberseite, ohne horizontal orientierte Strömungen zu verwenden, und sie ermöglicht gleichzeitig einen gleichmäßigen vertikalen Eintrag des Reaktorgases in das Wirbelbett.

Es wurde gefunden, daß der Winkel α der konischen Aufweitungen entscheidenden Einfluß auf die Belagbildung hat. In einer vorteilhaften Ausführungsform des Gasphasenwirbelschichtreaktors weisen daher die konischen Aufweitungen der Gasdurchlaßöffnungen eine Winkel α von 20 bis 40° auf. Winkel α von mehr als 40° sollten vermieden werden, weil sie die Belagbildung nur unzureichend vermindern, Winkel α von weniger als 20° führen zu einer nichtoptimalen Bodenplattendicke, wenn, wie es vorteilhaft ist, die Ränder der Öffnungen an der Oberseite des Bodens aneinander stoßen oder zumindest eine möglichst kleine planare Fläche übriglassen. Besonders vorteilhaft sind Winkel α von 25 bis 35°. Einen Schnitt durch die konischen Öffnungen zeigt Fig. 2.

Weiterhin wichtig für eine Verminderung der Belagbildung ist der planare Anteil der Bodenoberfläche. Dieser wird durch die Zahl der Gasdurchlaßöffnungen, durch den Winkel α sowie durch die geometrische Verteilung der Öffnungen über die Platte bestimmt. Der planare Restanteil der Oberseite der Gasverteilerplatte sollte möglichst gering sein und beträgt vorteilhafterweise weniger als 20 % der Gesamtfläche der Gasverteilerplatte, bevorzugt weniger als 10% und besonders bevorzugt weniger als 5 % der Gesamtfläche. Eine besonders geeignete Anordnung, der Öffnungen hinsichtlich einer Minimierung der planaren Oberfläche ist eine versetzte Anordnung, d.h. eine Anordnung der Öffnungsreihen auf Lücke, wie sie in Fig. 3 gezeigt ist.

Die Zahl und Form der Gasdurchlaßöffnungen sollte vorteilhafterweise so gewählt sein, daß der Druckverlust beim Durchströmen der Bodenplatte mindestens 30 % des Druckverlustes beträgt, den das Gasgemisch beim Durchströmen des Wirbelbetts erfährt. Nach unseren Erfahrungen empfiehlt sich ein Wert um 50 %, aber ein Mindestdruckverlust des Gasverteilers von 50 mbar und ein maximaler Druckverlust von 250 mbar, um die Gefahr einer Strahlenmühle bzw. die Bildung von Polymerstaub vermeiden.

Zur Erzielung eines angemessenen Druckverlustes sowie zur gleichmäßigen Verteilung des Gasgemisches im Wirbelbett und zur Verhinderung eines Durchrieselns von Polymerteilchen bei ausgeschaltetem Kompressor haben sich Gasdurchlaßöffnungen bewährt, die an ihrer engsten Stelle einen Durchmesser von 2 bis 5 mm aufweisen.

Befürchtungen, daß das Polymerpulver z.B. bei der Reaktorbefüllung oder bei einer Unterbrechung des Wirbelvorganges durch die konischen Lochbohrungen in großem Umfang zur Bodenunterseite rieseln könnte, traten nicht ein. Das Polymerpulver wird bei nicht zu flachem Winkel α (<40°) durch Brückenbildung in den Konen auf der Bodenoberseite gehalten.

Eine bevorzugte Ausführungsform des erfindungsgemäßen Gasphasenwirbelschichtreaktors ist dadurch gekennzeichnet, daß unterhalb der Gasverteilerplatte ein Strömungsteiler (7) angebracht ist.

Als Strömungsteiler eignen sich verschiedene Strömungsleiteinrichtungen, wie sie dem Fachmann bekannt sind. So können beispielsweise schräggestellte Metallbänder zu Kreisen oder konzentrischen Achtecken ausgebildet und diese so angeordnet werden, daß zwischen den quasi als Kegelstümpfe ineinandergestellten Achtecken Überlappung besteht. Die dabei gebildeten Kanäle bestehen immer aus Achteckunter- und nächster Achteckoberseite, so daß alle Metallbandseiten vom Reaktionsmedium angeströmt werden.

Außer den genannten Vorteilen, wie die vermeidung von Produktanwachsungen auf den Metalloberflächen von Reaktorboden und Strömungsteiler, zeigt die erfindungsgemäße Anordnung infolge optimaler Gasverteilung einen äußerst niedrigen Temperaturgraddienten von kleiner 2°C über eine Wirbelschichthöhe von ca. 14 Metern (gemessen ab 0,5 m oberhalb der Bodenplatte) bei einem Temperaturunterschied von mehr als 40°C zwischen Wirbelbett und dem unterhalb der Bodenplatte eintretenden Wirbelgas.

Der erfindungsgemäße Gasphasenwirbelschichtreaktor eignet sich besonders zur Durchführung eines Verfahrens zur Polymerisation von Ethylen oder zur Copolymerisation von Ethylen mit C₃- bis C₈-α-Olefinen bei einem Druck zwischen 10 und 90 bar und Temperaturen zwischen 30 und 125°C.

Der erfindungsgemäße Gasphasenwirbelschichtreaktor ist prinzipell zur Polymerisation verschiedener ethylenisch ungesättigter Monomerer geeignet. Zu nennen sind beispielsweise Ethylen, Propylen, 1-Buten, Isobuten, 1-Penten, 1-Hexen, 1-Hepten, 1-Octen und auch höhere α-Olefine; weiterhin kommen z.B. auch Diene wie Butadien und Cyclopentadien und Cycloolefine wie Cyclopenten und Cyclohexen in Betracht. Die ethylenisch ungesättigten Monomere könne allein oder in Mischung polymerisiert werden.

Das im Kreis geführte Reaktorgas wird dem unteren Ende des Gasphasenwirbelschichtreaktors zugeführt und an dessen oberen Ende wieder entnommen. Üblicherweise handelt es sich bei dem im Kreis geführten Reaktorgas um eine Mischung aus Ethylen, einem Molekulargewichtsregler wie Wasserstoff und Inertgasen wie Stickstoff und/oder gesättigte Kohlenwasserstoffe wie Ethan, Butan oder Hexan. Außerdem kann das Reaktorgas die genannten C₃- bis C₈-α-Monoolefine enthalten.

Die Geschwindigkeit des Reaktorgases, gemessen als Leerrohrgeschwindigkeit, muß ausreichend hoch sein, um zum einen das im Rohr befindliche, als Polymerisationszone dienende durchmischte Schüttgutbett aus kleinteiligem Polymerisat aufzuwirbeln und zum anderen die Polymerisationswärme wirksam abzuführen.

Zur Einstellung gleichbleibender Reaktionsbedingungen können die Bestandteile des Reaktorgases dem Gasphasenwirbelschichtreaktor direkt oder über das im Kreis geführte Reaktorgas zugeführt werden. Im allgemeinen erweist es sich als vorteilhaft, die vorstehend genannten C₃- bis C₈-α-Monoolefine direkt in den Gasphasenwirbelschichtreaktor einzuleiten. Des weiteren ist es für das erindungsgemäße Verfahren von Vorteil, den Katalysator sowie die gegebenenfalls mitverwendeten Cokatalysatoren direkt in das durchmischte Schüttgutbett aus kleinteiligem Polymerisat einzubringen. Hierbei erweist es sich als besonders vorteilhaft, den Katalysator gemäß dem in der DE-A-35 44 915 beschriebenen Verfahren portionsweise mit Stickstoff oder Argon direkt in das Schüttgutbett zu zerstäuben. Die Cokatalysatoren können dann mit Ethylen in das Schüttgutbett eingedüst werden.

Um das Mitreißen von kleinteiligem Polymerisat aus der Polymerisationszone in das Kreisgassystem zu vermeiden, weist der für das erfindungsgemäße verfahren verwendete Gasphasenwirbelschichtreaktor an seinem oberen Ende eine Beruhigungszone mit erweitertem Durchmesser auf, welche die Kreisgasgeschwindigkeit reduziert. Im allgemeinen empfiehlt es sich, die Kreisgasgeschwindigkeit in dieser Beruhigungszone auf ein Drittel bis ein Sechstel der Kreisgasgeschwindigkeit in der Polymerisationszone zu verringern.

Das im Kreis geführte Reaktorgas wird nach seinem Austritt aus dem Gasphasenwirbelschichtreaktor einem Kreisgasverdichter und einem Kreisgaskühler zugeführt. Hiernach wird das gekühlte und verdichtete Kreisgas über die beschriebenen Gasverteilereinrichtungen wieder in das durchmischte Schüttgutbett des Gasphasenwirbelschichtreaktors eingeleitet.

Auch bei dem erfindungsgemäßen Verfahren bestimmen die Verhältnisse der Ausgangsprodukte, insbesondere aber das Verhältnis von Ethylen zu den C₃- bis C₈-α-Monoolefinen die Dichte d der resultierenden Copolymerisate.

Des weiteren bestimmt die Menge des zudosierten Katalysators den Produktausstoß des Gasphasenwirbelschichtreaktors.

Der Druck, unter dem das Reaktorgas steht, bzw. bei dem die (Co)Polymerisation durchgeführt wird, liegt vorzugsweise zwischen 10 und 80 und insbesondere zwischen 20 und 40 bar.

Der erfindungsgemäße Reaktor ist besonders vorteilhaft zur Durchführung der Polymerisation in Gegenwart kondensierter Monomerer und/oder kondensierter inerter Kohlenwasserstoffe wie Hexan, da die Gefahr der Belagbildung durch Kondensattröpfchen an der Bodenoberfläche durch die erfindungsgemäßen Einrichtungen verhindert wird.

Das bei dem erfindungsgemäßen Verfahren gebildete (Co)Polymerisat kann in üblicher und bekannter Weise aus dem Gasphasenwirbelschichtreaktor ausgeschleust werden. Aufgrund der besonderen Vorteile des erfindungsgemäßen Verfahrens und der hiermit hergestellten Produkte kann dieses Ausschleusen durch einfaches Öffnen eines Kugelhahns in einer Austragsleitung zu einem Entspannungsbehälter erfolgen. Hierbei wird der Druck im Entspannungsbehälter möglichst niedrig gehalten, um auch größere Förderstrecken verwenden zu können und um die (Co)Polymerisate bereits beim Ausschleusen von adsorbierten Flüssigkeiten wie Restmonomeren zu befreien. Im Entspannungsbehälter können dann die (Co)Polymerisate beispielsweise durch Spülen mit geringen Mengen Stickstoff weiter gereinigt werden. Die hierbei desorbierten Restmonomere, der Spülstickstoff und das beim Produktaustrag mitgerissene Treibgas können einer üblichen und bekannten Kondensationsstufe zugeführt werden, worin sie - vorteilhafterweise bei Normaldruck und tieferen Temperaturen - wieder voneinander getrennt werden. Im allgemeinen werden die flüssigen Restmonomere dem Schüttgutbett wieder direkt zugeführt. Das verbleibende Gasgemisch kann dagegen in einem üblichen und bekannten Rückgasverdichter verdichtet und dem im Kreis geführten Reaktorgas wieder hinzugegeben werden.

Die in dem Entspannungsbehälter befindlichen (Co)Polymerisate können in einen Desodorier- oder Desaktivierbehälter weitergefördert werden, worin sie einer üblichen und bekannten Stickstoff und/oder Wasserdampfbehandlung unterzogen werden können.

Der erfindungsgemäße Gasverteilerboden, gewünschtenfalls in Kombination mit einem Strömungsteiler, gewährleistet eine äußerst homogene Gasverteilung und eine optimale Durchmischung des Schüttgutbettes. Die in erfindungsgemäßer Verfahrensweise erhaltenen (Co)Polymerisate können daher ohne jeglichen Agglomeratanteil erhalten werden und ermöglichen einen technisch einfacheren Produktaustrag als dies bei den bekannten Gasphasenwirbelschichtverfahren der Fall ist: Aufwendige Austragsschleusen sind nicht mehr notwendig, sondern die (Co)Polymerisate können durch einfaches Öffnen und Schließen eines Kugelhahns niedrigen Querschnitts unmittelbar in eine Austrags- oder Entspannungsbehälter gegen niedrigen atmosphärischen Überdruck entspannen, ohne daß hierbei ein hoher Gasanteil,welcher in der Folge abgetrennt, mit hohem Energieaufwand komprimiert und dem Gasphasenwirbelschichtreaktor wieder zugeführt werden müßte, als Ballast anfällt.

### Beispiel

In einem Wirbelschichtreaktor mit 3,5 m Durchmesser und 14 m Höhe wurde eine Bodenplatte mit den folgenden Maßen eingebaut:

| | |
|---|---|
| Dicke | 50 mm |
| Anzahl der Löcher | 19 500 |
| unterer Lochdurchmesser | 4 mm |
| oberer Lochdurchmesser | 25 mm |
| Öffnungswinkel α | 30° |

In diesem Wirbelschichtreaktor wurde eine kontinuierliche Copolymerisation von Ethylen und Hexen durchgeführt, wobei das Reaktionsgas folgende Zusammensetzung aufwies:

| | |
|---|---|
| Ethylen | 44,5 mol-% |
| 1-Hexen | 4,5 mol-% |
| Wasserstoff | 6,0 mol-% |
| Stickstoff | 45,0 mol-% |

Der Reaktordruck betrug 20 bar, die Polymerisationstemperatur 100°C, die Gasgeschwindigkeit 0,7 m/sec, wobei am Reaktorboden ein Druckverlust von 130 mbar und im Wirbelbett ein Druckverlust von 250 mbar gemessen wurde.

Die Copolymerisation wurde kontinuierlich über 7 Tage durchgeführt. Bei einer anschließenden Inspektion des Reaktors wurden keinerlei Beläge an der Bodenoberseite gefunden.

## Patentansprüche

1. Gasphasenwirbelschichtreaktor zur Polymerisation ethylenisch ungesättigter Monomerer, umfassend einen Reaktorraum (1) in Form eines vertikalen Rohres, eine an den oberen Teil des Reaktorraumes anschließende Beruhigungszone (2), eine Kreisgasleitung (3), einen Kreisgaskompressor (4), eine Kühleinrichtung (5), eine Gasverteilerplatte (6), welche die untere Begrenzung des Reaktorraumes darstellt und gewünschtenfalls einen Strömungsteiler (7), wobei die Gasverteilerplatte (6) eine Vielzahl von Gasdurchlaßöffnungen (8) aufweist, deren Ausgangsseiten konisch aufgeweitet sind, wobei die konische Aufweitung der Gasdurchlaßöffnungen einen Winkel α von 20 bis 40° aufweist und der planare Restanteil der Oberseite der Gasverteilerplatte weniger als 20 % der Gesamtfläche der Gasverteilerplatte beträgt.

2. Gasphasenwirbelschichtreaktor nach Anspruch 1, **dadurch gekennzeichnet, daß** die Gasdurchlaßöffnungen der Gasverteilerplatte so gestaltet sind, daß der Druckverlust beim Durchströmen der Bodenplatte mindestens 30 % des Druckverlustes beträgt, den das Gasgemisch beim Durchströmen des Wirbelbetts erfährt.

3. Gasphasenwirbelschichtreaktor nach den Ansprüchen 1 oder 2, **dadurch gekennzeichnet, daß** der Durchmesser der Gasdurchlaßöffnungen an ihrer engsten Stelle zwischen 2 und 5 mm beträgt.

4. Gasphasenwirbelschichtreaktor nach den Ansprüchen 1 bis 3, **dadurch gekennzeichnet, daß** unterhalb der Gasverteilerplatte ein Strömungsteiler (7) angebracht ist.

5. Verfahren zur Polymerisation von Ethylen oder zur Copolymerisation von Ethylen mit C₃- bis C₈-α-Olefinen bei einem Druck zwischen 10 und 90 bar und Temperaturen zwischen 30 und 125°C, **dadurch gekennzeichnet, daß** das Verfahren in einem Gasphasenwirbelschichtreaktor gemäß den Ansprüchen 1 bis 4 durchgeführt wird.

6. Verfahren nach Anspruch 5, **dadurch gekennzeichnet, daß** die Polymerisation in Gegenwart kondensierter Monomerer durchgeführt wird.

## Claims

1. A gas-phase fluidized-bed reactor for polymerizing ethylenically unsaturated monomers, comprising a reactor space (1) in the form of a vertical tube, a calming zone (2) adjoining the upper part of the reactor space, a circulated gas line (3), a circulated gas compressor (4), a cooling apparatus (5), a gas distributor plate (6) which forms the lower boundary of the reactor space and, if desired, a flow divider (7), wherein the gas distributor plate (6) has a plurality of gas flow orifices (8) whose outlet sides are widened conically, wherein the conical widening of the gas flow orifices has an angle α of from 20 to 40° and the remaining planar part of the upper side of the gas distributor plate is less than 20% of the total area of the gas distributor plate.

2. A gas-phase fluidized-bed reactor as claimed in claim 1, wherein the gas flow orifices of the gas distributor plate are configured such that the pressure drop on flowing through the bottom plate is at least 30% of the pressure drop experienced by the gas mixture on flowing through the fluidized bed.

3. A gas-phase fluidized-bed reactor as claimed in either of claims 1 and 2, wherein the diameter of the gas flow orifices is from 2 to 5 mm at their narrowest point.

4. A gas-phase fluidized-bed reactor as claimed in any of claims 1 to 3, wherein a flow divider (7) is installed below the gas distributor plate.

5. A process for polymerizing ethylene or for copolymerizing ethylene with C₃-C₈-α-olefins at from 30 to 125°C and a pressure of from 10 to 90 bar, wherein the process is carried out in a gas-phase fluidized-bed reactor as claimed in any of claims 1 to 4.

6. A process as claimed in claim 5, wherein the polymerization is carried out in the presence of condensed monomers.

## Revendications

1. Réacteur à lit fluidisé à phase gazeuse pour la polymérisation de monomères à insaturation éthylénique, comprenant un espace de réacteur (1) sous forme d'un tube vertical, une pompe de stabilisation (2) raccordée à la partie supérieure de l'espace de réacteur, une conduite de gaz de circulation (3), un compresseur de gaz circulant (4), un dispositif réfrigérant (5), une plaque de distribution de gaz (6), qui constitue la limite inférieure de l'espace de réacteur, et en option un répartiteur d'écoulement (7), tandis que la plaque de distribution de gaz (6) présente une multitude d'orifices (8) pour le passage de gaz, dont les faces de sortie sont évasées de façon conique, tandis que l'élargissement conique des orifices de passage de gaz présente un angle α de 20 à 40° et la portion restante, plane, de la face supérieure de la plaque de distribution de gaz représente moins de 20% de la surface totale de la plaque de distribution de gaz.

2. Réacteur à lit fluidisé à phase gazeuse selon la revendication 1, **caractérisé par le fait que** les orifices ou passages de gaz de la plaque de distribution de gaz sont agencés de telle manière que la perte de charge lors des passages à travers la plaque de fond représente au moins 30% de la perte de charge que subit le mélange de gaz lors de la traversée du lit fluidisé.

3. Réacteur à lit fluidisé à phase gazeuse selon les revendications 1 ou 2, **caractérisé par le fait que** le diamètre des orifices de passage de gaz vaut à leur endroit le plus étroit entre 2 et 5 mm.

4. Réacteur à lit fluidisé à phase gazeuse selon les revendications 1 à 3, **caractérisé par le fait qu'**un répartiteur d'écoulement (7) est placé en dessous de la plaque de distribution de gaz.

5. Procédé pour la polymérisation d'éthylène ou pour la copolymérisation d'éthylène avec des α-oléfines en C₃-C₈ à une pression entre 10 et 90 bar et à des températures entre 30 et 125°C, **caractérisé par le fait que** le procédé est mis en oeuvre dans un réacteur à lit fluidisé à phase gazeuse selon les revendications 1 à 4.

6. Procédé selon la revendication 5, **caractérisé par le fait que** la polymérisation est effectuée en présence de monomères condensés.
